Europäisches Patentamt

European Patent Office

Office européen des brevets

(11) Numéro de publication: **0 321 012 B1**

# FASCICULE DE BREVET EUROPEEN

(45) Date de publication de fascicule du brevet: **15.04.92** (51) Int. Cl.⁵: **B64B 1/40**, B64G 1/10

(21) Numéro de dépôt: **88202712.1**

(22) Date de dépôt: **28.11.88**

(54) **Aérostat destiné à évoluer de façon autonome et reversible entre le sol d'une planete à atmosphere et une altitude plafond prédéterminée.**

(30) Priorité: **02.12.87 FR 8716842**

(43) Date de publication de la demande:
**21.06.89 Bulletin 89/25**

(45) Mention de la délivrance du brevet:
**15.04.92 Bulletin 92/16**

(84) Etats contractants désignés:
**AT BE CH DE ES FR GB GR IT LI LU NL SE**

(56) Documents cités:
EP-A- 0 184 262      FR-A- 1 535 761
FR-A- 2 360 089      US-A- 3 484 058
US-A- 3 773 279      US-A- 4 394 998

(73) Titulaire: **CENTRE NATIONAL D'ETUDES SPATIALES (C.N.E.S.) Etablissement public, scientifique et technique à caractère industriel et commercial 2, place Maurice-Ouentin F-75039 Paris Cédex 01(FR)**

(72) Inventeur: **Regipa, Robert Bâtiment Provence 226, avenue Saint-Exupéry F-31400 Toulouse(FR)**
Inventeur: **Villaeys, Jacques 19, avenue Arnaud F-31320 Castanet(FR)**

(74) Mandataire: **Barre, Philippe Cabinet Barre-Gatti-Laforgue 95 rue des Amidonniers F-31069 Toulouse Cédex(FR)**

EP 0 321 012 B1

# Description

L'invention concerne un aérostat destiné à évoluer de façon autonome et réversible entre le sol d'une planète à atmosphère et une altitude plafond prédéterminée.

Un des prochains objectifs de la conquête spatiale est d'envoyer une mission sur la planète Mars. A cet effet, plusieurs techniques ont été proposées en vue d'explorer cette planète. Parmi celles-ci, il a été envisagé de réaliser un ballon spatial apte à évoluer de façon autonome et réversible entre le sol de la planète et une altitude prédéterminée. Cette solution présente, en effet, l'avantage de permettre, à la fois, une étude du sol de la planète et de l'atmosphère entourant cette dernière. Un tel objectif ne peut être atteint en s'inspirant des techniques utilisées pour la réalisation de ballons captifs tels que décrits notamment dans le brevet US 3.773.279, ou de ballons libres tels que décrits dans les brevets FR 1.535.761, US 3.484.058 et US 4.394.998. En effet, aucun de ces ballons ne peut évoluer naturellement sans intervention externe de façon réversible entre le sol d'une planète et une altitude prédéterminée.

De ce fait, les études effectuées se sont orientées vers la réalisation d'un ballon spatial conçu pour domestiquer le bilan radiatif relatif entre le jour et la nuit, de façon à prendre de lui-même de l'altitude durant le jour et à en perdre durant la nuit.

Dans ce sens, une première solution a consisté à réaliser un ballon spatial comportant une enveloppe fermée contenant un gaz plus léger que le gaz présent dans l'atmosphère, dotée d'une face interne métallisée en vue de permettre un réchauffage suffisant de ce gaz. La masse de gaz est en outre adaptée de façon que le ballon ne puisse décoller durant la nuit en raison de la faible température du gaz et prenne de l'altitude durant le jour suite au réchauffement de ce dernier. Cette solution, dont le gros avantage réside dans sa simplicité, présente toutefois un inconvénient fondamental. En effet, si au sol le volume de gaz renfermé dans l'enveloppe est faible, lorsque le ballon spatial arrive à son plafond, la même masse de gaz occupe la totalité du volume de l'enveloppe en raison de la faible pression de l'atmosphère ambiante. Ce gaz très chaud provoque des surpressions importantes qui peuvent conduire à l'éclatement du ballon spatial. Pour supporter ces surpressions, la seule solution est donc de prévoir une enveloppe en un matériau très résistant. Toutefois, cette solution n'est pas adaptée pour ce genre de mission en raison du poids important d'une telle enveloppe, incompatible avec un transport par satellite.

Pour pallier cet inconvénient, une deuxième solution a consisté à accoupler au moyen d'un lien un premier ballon comportant une enveloppe fermée non métallisée et une montgolfière solaire dotée d'une ouverture permanente. Cette solution décrite dans le brevet FR 2.360.089 a donc consisté à conjuguer les effets d'un ballon porteur fournissant une force ascensionnelle constante mais insuffisante pour permettre à l'ensemble de prendre de l'altitude, et d'une montgolfière fournissant une force ascensionnelle variable en fonction de la température et de la densité du gaz disponible dans l'atmosphère ambiante. Cette montgolfière fournit ainsi une force ascensionnelle maximale à de faibles altitudes qui diminue au fur et à mesure de l'élévation de l'ensemble. Les risques de mise en surpression du ballon porteur sont donc diminués. Toutefois, cette solution présente également des inconvénients. En effet, les risques de mise en surpression du ballon porteur, bien que diminués, subsistent tout de même en raison de la force ascensionnelle de la montgolfière qui renferme un gaz très chaud. De plus, le décollage d'un tel système est très hasardeux, notamment en cas de vents violents. En effet, lorsque l'ensemble se trouve au sol, le ballon porteur et la montgolfière sont maintenus au-dessus du sol grâce à la portance du ballon porteur. La montgolfière est donc soumise à l'action du vent et peut se vider en prenant la forme d'un spee si elle est démunie de lien interpolaire, ou en s'étendant autour de son lien interpolaire si, tel que décrit dans le brevet FR 2.360.089, elle en est dotée. Dans l'un et l'autre cas, l'amorçage de son remplissage sera donc très hasardeux.

La présente invention vise à pallier les inconvénients des aérostats précités et a pour objectif essentiel de fournir un aérostat apte à évoluer de façon autonome et réversible entre le sol d'une planète et une altitude plafond prédéterminée sans risque de mise en surpression à l'altitude plafond et de non décollage à partir du sol.

Un autre objectif est de fournir un aérostat d'un poids relativement faible et présentant un bon rapport force ascensionnelle sur masse.

Un autre objectif est de fournir un aérostat de conception adaptée pour permettre tout type de mission souhaitée.

A cet effet, l'invention concerne un aérostat du type ballon double comprenant :

- un premier ballon, dit porteur, comportant une enveloppe fermée définissant un pôle supérieur et un pôle inférieur et destinée à contenir un gaz plus léger que le gaz présent dans l'atmosphère ambiante,
- un deuxième ballon, dit montgolfière solaire, comportant une enveloppe réalisée en un matériau apte à absorber le rayonnement solaire et à émettre des rayonnements infrarouge à l'intérieur du volume qu'elle délimite de façon à chauffer le gaz renfermé, ladite enveloppe comprenant une extrémité, dite inférieure, comportant une ouverture permanente destinée au remplissage de la montgolfière par le gaz présent dans l'atmosphère ambiante.

Selon la présente invention, cet aérostat se caractérise en ce que :

- le ballon porteur est constitué d'une enveloppe à symétrie de révolution autour d'un axe réalisée en un matériau transparent au rayonnement solaire et comportant une portion sensiblement cylindrique et un pôle supérieur et un pôle inférieur situés sur l'axe de révolution,
- la montgolfière solaire est constituée d'une enveloppe à symétrie de révolution autour d'un axe comportant une portion sensiblement cylindrique dotée :
  . d'une extrémité ouverte opposée à son extrémité inférieure et délimitée par une bordure annulaire de section conjuguée de celle du ballon porteur,
  . d'un fond aplati comportant une ouverture permanente,
- des moyens de fixation étanche de la bordure annulaire de la montgolfière sur la paroi périphérique du ballon porteur, sont adaptés pour solidariser les enveloppes desdits ballon porteur et montgolfière de façon que le ballon porteur s'étende partiellement à l'intérieur de l'enveloppe de la montgolfière.

L'idée à la base de l'invention est donc d'associer un ballon porteur à masse constante et volume variable avec une montgolfière solaire à masse et volume variables qui possède :

- un volume maximum au sol et dans les basses couches en vue d'obtenir une efficacité maximale lors du décollage, et dans les basses couches,
- un volume faible en altitude qui lui confère une efficacité faible voire nulle en vue d'éviter la mise en pression et l'éclatement du ballon porteur.

Le procédé de réalisation d'un tel aérostat est du type consistant :

- à réaliser une première enveloppe fermée, dite ballon porteur, définissant un pôle inférieur et un pôle supérieur et destinée à renfermer un gaz plus léger que le gaz présent dans l'atmosphère,
- à réaliser, au moyen d'un matériau apte à absorber le rayonnement solaire et à réémettre des rayonnements infrarouge, une deuxième enveloppe, dite montgolfière, comprenant une extrémité dite inférieure dotée d'une ouverture permanente.

Ce procédé se caractérise en ce qu'il consiste :

- à estimer la variation de poussée, par unité de volume, de la montgolfière en l'absence et en de rayonnement solaire et à déterminer le volume de cette montgolfière nécessaire pour obtenir le décollage de l'aérostat et de la charge portée par ce dernier,
- à déterminer une masse de gaz m1 qui est, en l'absence de rayonnement solaire :
  . nécessaire dans le ballon porteur pour assurer le maintien dudit ballon porteur et de la montgolfière au-dessus du sol,
  . inférieure à la masse de gaz nécessaire dans le ballon porteur pour assurer le décollage de l'aérostat et de la charge,
- à réaliser un ballon porteur constitué d'une enveloppe en un matériau transparent au rayonnement solaire présentant une symétrie de révolution autour d'un axe et comportant une portion sensiblement cylindrique et un pôle supérieur et un pôle inférieur situés sur l'axe de révolution, ledit ballon porteur étant de dimensions adaptées pour que son volume soit sensiblement supérieur au volume occupé par la masse de gaz m1 à l'altitude plafond prédéterminée,
- à réaliser une montgolfière présentant une symétrie de révolution autour d'un axe et une portion sensiblement cylindrique dotée :
  . d'une extrémité, dite supérieure, ouverte délimitée par une bordure annulaire de section conjuguée de celle du ballon porteur,
  . d'un fond aplati comportant une ouverture permanente,
- à enfiler la montgolfière autour du ballon porteur, par sa bordure annulaire, de façon que :
  . le ballon porteur s'étende partiellement à l'intérieur de ladite montgolfière,
  . la bordure annulaire de la montgolfière se trouve en regard d'une zone de la portion cylindrique du ballon porteur sollicitée en tension circonférentielle, au sol, pour une masse de gaz m1,
  . le volume résiduel de la montgolfière, au sol, corresponde au volume nécessaire pour obtenir le décollage de l'aérostat et de la charge,
- à fixer la bordure annulaire de la montgolfière sur la périphérie de l'enveloppe du ballon porteur.

La fiabilité de fonctionnement de cet aérostat repose sur les points suivants :

- l'accrochage de la montgolfière est effectué sur une portion de l'enveloppe du ballon porteur sollicitée en tension circonférentielle, au sol, de façon à conférer à cette montgolfière un volume résiduel important. Le moindre réchauffement de la masse de gaz ainsi renfermé à l'intérieur de la montgolfière provoque donc un remplissage rapide de cette dernière. Il est à noter, en outre, que ce volume résiduel est d'autant plus important que le volume du ballon porteur est faible au sol, en raison de la pression importante du gaz présent dans l'atmosphère,

- lors du décollage et dans les basses couches, la montgolfière acquiert rapidement son volume maximum et fournit donc sa force ascensionnelle maximale,
- au fur et à mesure de l'ascension, l'expansion de la masse de gaz contenue dans le ballon porteur entraîne différentiellement la diminution du volume de la montgolfière et par conséquent de la force ascensionnelle de cette dernière,
- lorsque le soleil se trouve au zénith, le fait que la montgolfière soit dépourvue d'un dôme entraîne une diminution de l'échauffement du gaz qu'elle renferme.

Ces deux derniers points concourrent pour que la poussée de la montgolfière soit de plus en plus faible au fur et à mesure de l'ascension, et que, par conséquent, l'aérostat monte moins haut que les aérostats décrits ci-avant. Les risques de mise en surpression du ballon porteur se trouvent ainsi supprimées.

Il est à noter par ailleurs que la portance de cet aérostat est assurée en grande partie par le ballon porteur ce qui garantit contre tout risque de chute du ballon. La montgolfière permet quant à elle de fournir l'appoint de poussée qui permet d'obtenir les fluctuations et par conséquent le pilotage dans le sens vertical.

Un tel aérostat présente enfin un coefficient thermo-optique global modulable en fonction de son élancement et de la nature des matériaux des enveloppes du ballon porteur et de la montgolfière solaire. Or l'élancement et la nature des matériaux constituent des paramètres qui sont facilement maîtrisables. De ce fait, le bilan thermique global d'un tel aérostat être adaptées au type de mission souhaitée avec la garantie d'un décollage naturel dès le lever du jour, d'une ascension rapide lors de l'élévation du soleil, et d'un échauffement minimum du ballon porteur à l'altitude plafond supprimant tout risque d'éclatement.

D'autres caractéristiques et avantages de l'invention se dégageront de la description détaillée qui suit en référence aux dessins annexés qui en représentent, à titre d'exemple non limitatif, un mode de réalisation préférentiel.

Sur ces dessins qui font partie intégrante de la présente description :

- la figure 1 est une coupe longitudinale, par un plan vertical, d'un aérostat conforme à l'invention, se trouvant à proximité du sol,
- la figure 2 en est une coupe longitudinale, par un plan vertical, dans les basses couches de l'atmosphère,
- la figure 3 en est une coupe longitudinale, par un plan vertical, à son altitude plafond,
- la figure 4 est une vue de dessous du fond aplati d'une montgolfière conforme à l'invention,
- les figures 5a et 5b illustrent deux étapes de la fabrication du fond aplati de cette montgolfière.

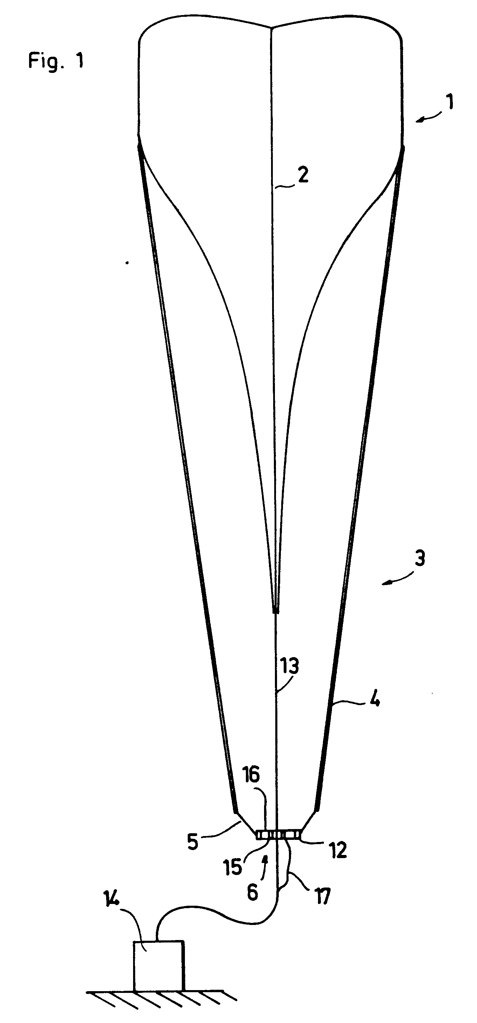

L'aérostat représenté aux figures 1, 2 et 3 est destiné à évoluer de façon réversible et autonome entre le sol d'une planète à atmosphère, telle que la Terre ou Mars, et une altitude plafond prédéterminée.

Cet aérostat comporte en premier lieu un ballon porteur 1 comprenant une enveloppe à symétrie de révolution autour d'un axe, dotée d'une portion sensiblement cylindrique et d'un pôle supérieur et d'un pôle inférieur situés sur l'axe de révolution.

Cette enveloppe est réalisée à partir de fuseaux rectangulaires en un film de polyester de 3,5 microns d'épaisseur, conformément au procédé décrit dans le brevet n° 80.00343 au nom du déposant. Cette enveloppe comporte, en outre, un lien interpolaire 2 reliant son pôle supérieur à son pôle inférieur.

L'enveloppe de ce ballon porteur 1 renferme une masse de gaz $m_1$ plus léger que le gaz présent dans l'atmosphère. Cette masse de gaz $m_1$ est calculée de façon que le ballon porteur 1 présente :

- un état de plénitude à une altitude plafond prédéterminée, supérieure à l'altitude plafond prévue dans les conditions d'exploration, de façon que l'enveloppe ne soit jamais mise en surpression,
- un état de gonflage minimal au sol pour lequel :
  . la portion supérieure de l'enveloppe est sollicitée en tension circonférentielle,
  . il possède un portance suffisante pour maintenir l'aérostat au-dessus du sol et insuffisante pour entraîner le décollage de cet aérostat et de sa charge.

L'aérostat comporte, en second lieu, une deuxième enveloppe 3, dite montgolfière solaire, à symétrie de révolution autour d'un axe, comprenant une portion sensiblement cylindrique 4 et un fond aplati 5 doté d'une ouverture permanente 6.

La portion cylindrique 4 de cette enveloppe présente une section conjuguée de celle de l'enveloppe du ballon porteur 1, et est dotée d'une extrémité ouverte délimitée par une bordure annulaire. Cette portion cylindrique 4 est réalisée, comme précédemment, par assemblage de fuseaux rectangulaires en un film de polyester de 3,5 microns d'épaisseur. La face interne de ces fuseaux est, en outre, revêtue d'une pellicule métallisée, par exemple aluminisée.

Une telle enveloppe permet le réchauffement du gaz qu'elle renferme. En effet, les rayons solaires sont absorbés par le film de polyester qui les transmet par conduction à la pellicule métallisée. Cette pellicule les réemet ensuite sous forme d'infrarouge à l'intérieur de l'enveloppe.

Cette portion cylindrique 4 est enfilée autour du ballon porteur 1 par sa bordure annulaire de façon à s'étendre partiellement dans le prolongement du pôle inférieur de ce dernier. Elle est ensuite fixée de façon étanche sur la périphérie de l'enveloppe de ce ballon porteur 1 sur une portion de celle-ci sollicitée en tension circonférentielle lorsque ledit ballon porteur se trouve à proximité du sol. Il est à noter que la réalisation de ces deux enveloppes et leur fixation peuvent être effectuées simultanément au moyen d'une machine telle que décrite dans la demande de brevet français n° 86.03553 au nom du déposant.

Par ailleurs, la fixation de la bordure annulaire de la montgolfière 3 sur le ballon porteur 1 consiste, dans un premier temps, à encoller ladite bordure annulaire sur ledit ballon porteur. On dispose ensuite un ruban circonférentiel autour de la bordure annulaire et on colle, enfin ce ruban sur le ballon porteur 1 et la montgolfière 3.

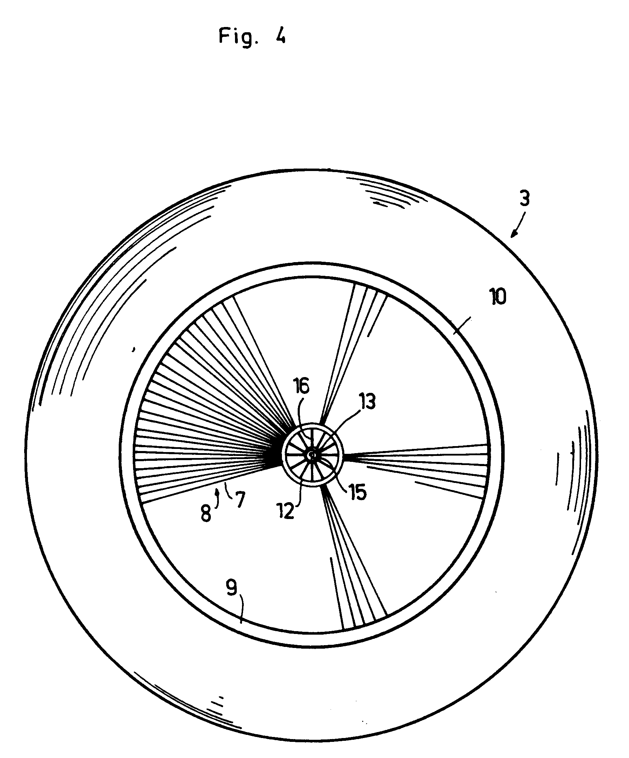

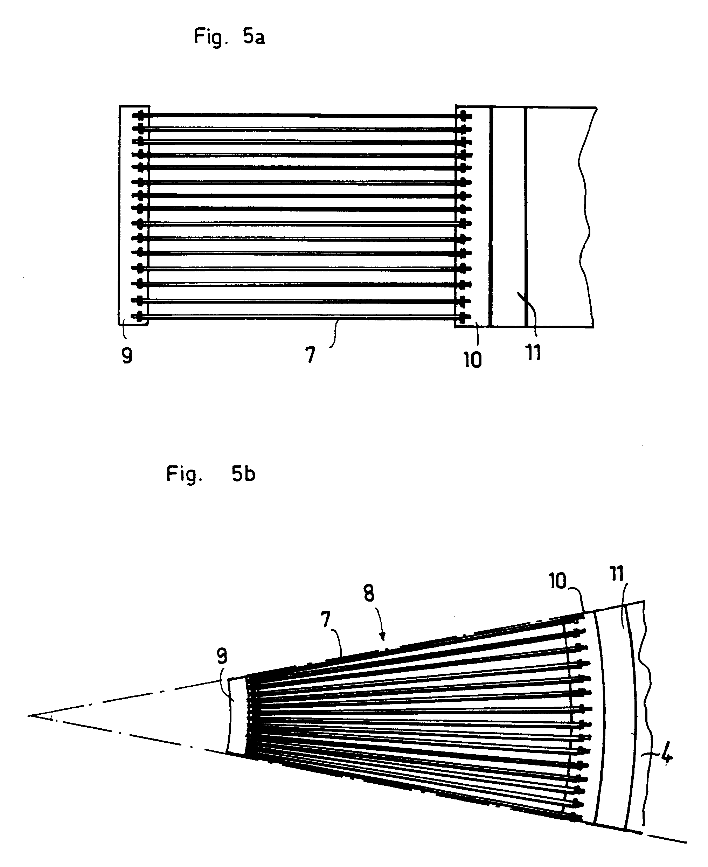

Le fond aplati 5 de l'enveloppe est quant à lui réalisé en un matériau perméable pour le gaz disponible dans l'atmosphère ambiante. Il peut ainsi être constitué d'un tissu largement poreux. Un autre mode de réalisation tel qu'illustré aux figures 4, 5a et 5b, consiste à utiliser des fibres 7 de même longueur espacées les unes par rapport aux autres et s'étendant radialement par rapport à l'axe de révolution de la montgolfière 3. La fabrication du fond aplati 5 est réalisé en confectionnant plusieurs fuseaux 8 similaires composés, chacun, d'une pluralité de fibres 7 espacées.

Le procédé mis en oeuvre pour la réalisation de ces fuseaux 8 est illustré aux figures 5a et 5b. Les fibres 7, en un matériau tel que polyester ou polyamide sont disposées parallèlement les unes par rapport aux autres sur une table.

Elles sont fixées, vers une de leurs extrémités, sur une bande souple élastique 9 maintenue en extension sur la table. Vers leur autre extrémité, elles sont cousues sur une bande 10 en tissu souple présentant des propriétés élastiques par rapport au film de polyester formant la portion cylindrique 4. Le but de cette bande intermédiaire 10 est de jouer un rôle d'amortisseur d'efforts de façon à ne pas transmettre au film de polyester les éventuelles irrégularités d'efforts auxquelles sont soumises les fibres 7, en vue d'éviter tout risque de déchirure de ce film.

La liaison entre la bande intermédiaire 10 et le fuseau de film de polyester est finalement assurée par un ruban de polyéthylène 11. Une fois ces assemblages réalisés, la bande souple élastique 9 est relâchée, de façon que chaque fuseau 8 se présente sous la forme d'un secteur circulaire centré sur l'axe de révolution de la montgolfière 3.

Chacun de ces fuseaux 8 est ensuite fixé, par l'intermédiaire de la bande souple élastique 7, sur une pièce annulaire 12 délimitant l'ouverture permanente 6 de la montgolfière 3.

La montgolfière 3 comporte également un lien interpolaire 13 fixé au pôle inférieur du ballon porteur 1 dans le prolongement du lien interpolaire 2 de ce dernier, et se prolongeant au-dessous du pôle inférieur de cette montgolfière 3, en vue de maintenir une charge 14.

Ce lien interpolaire 13 est guidé, au niveau du pôle inférieur de la montgolfière 3, au moyen d'un anneau de guidage 15 centré sur l'axe de révolution de cette montgolfière, et solidarisé à la pièce annulaire 12 au moyen d'éléments de fixation radiaux 16. Ces éléments de fixation 16 peuvent, par exemple, être constitués de câbles de "Kevlar".

La montgolfière 3 comporte, enfin, un brin auxiliaire 17 fixé, d'une part, sur le lien interpolaire 13 entre la charge 14 et le pôle inférieur de cette montgolfière et, d'autre part, sur l'anneau de guidage 15. Ce brin auxiliaire 17 présente une longueur adaptée pour être sollicité en traction pour un état de remplissage déterminé de la montgolfière 3. Le but d'un tel brin est de solliciter l'enveloppe de la montgolfière 3 en tension longitudinale, par la prise en compte par cette enveloppe d'une partie de la charge 14 portée par le ballon spatial. On évite ainsi tout risque de fasiement de cette enveloppe qui pourrait désagréger cette dernière.

Les divers éléments constitutifs de cet aérostat et leur agencement ayant été décrits, on va expliquer ci-après ses caractéristiques de fonctionnement.

Cet aérostat est notamment destiné à être transporté au moyen d'un satellite puis parachuté à proximité de la planète Mars, en vue de l'exploration de cette dernière. Lors de ce parachutage, des moyens de gonflage du ballon porteur 1 en un gaz, tel que de l'hélium, plus léger que le gaz présent dans l'atmosphère permettront de remplir ce ballon porteur d'une masse de gaz prédéterminée. Le cycle d'évolution du ballon spatial entre le sol de la planète et une altitude plafond prédéterminée est ensuite le suivant.

Durant la nuit, la température du gaz présent dans l'atmosphère et, par conséquent, du gaz contenu dans la montgolfière 3 est relativement faible. La montgolfière 3 ne produit donc pas de force ascensionnelle. L'aérostat se trouve alors à proximité du sol, la charge 14 reposant sur ce dernier, grâce à la seule portance du ballon porteur 1 (figure 1).

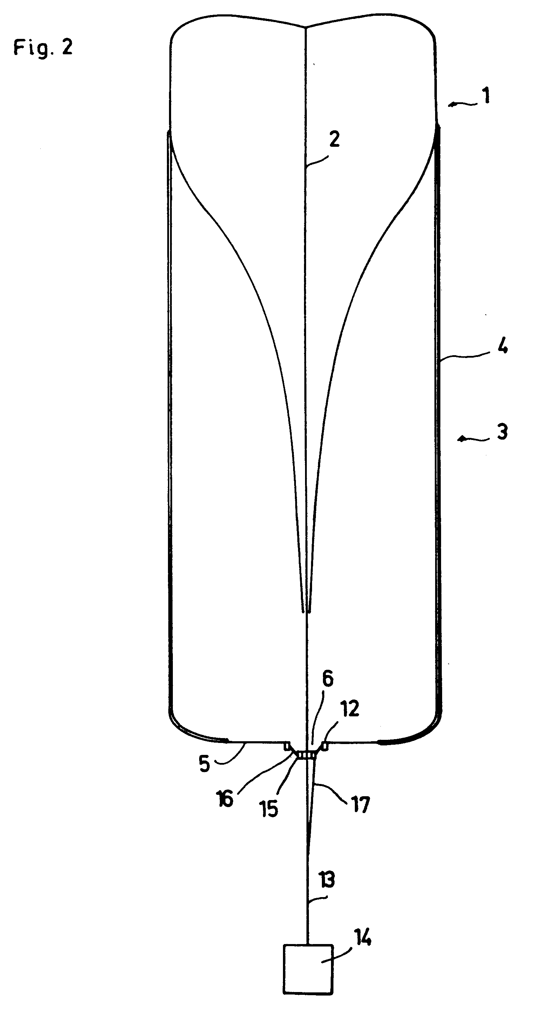

Dès le lever du jour, le moindre échauffement du gaz présent dans l'atmosphère entraîne un remplissage rapide de la montgolfière 3 grâce à son volume résiduel important. Cette dernière parvient donc rapidement à son état de plénitude et fournit une force ascensionnelle maximale pour le décollage et dans les basses couches. En outre, à l'état de plénitude de la montgolfière 3, la mise en traction du brin auxiliaire 17 garantit contre tout risque de fasiement (figure 2). Il est à noter également que le fait que la montgolfière 3 présente un volume résiduel important, permet de diminuer la masse de gaz contenue dans le ballon porteur 1, et par conséquent le poids des moyens de gonflage de ce dernier. Ce dernier point est très important dans l'optique d'un lancement par satellite où tout gain de poids est très apprécié.

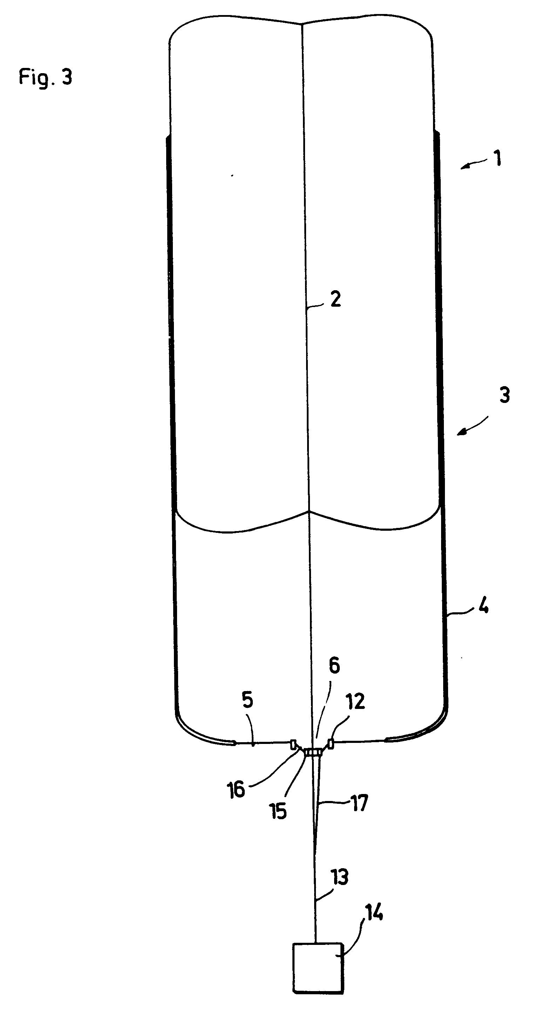

Au fur et à mesure de l'élévation de l'aérostat, le volume du ballon porteur 1 augmente du fait de la baisse de pression de l'atmosphère, et par conséquent, le volume de la montgolfière 3 diminue proportionnellement (figure 3). Sa force ascensionnelle diminue donc, et ce d'autant que l'échauffement du gaz est moindre lorsque le soleil se trouve au zénith du fait de l'absence de dôme.

Enfin, lorsque le soleil décline, la température du gaz contenu dans la montgolfière 3 décroît progressivement, entraînant une lente descente de l'aérostat vers le sol.

Les caractéristiques dimensionnelles d'un tel aérostat seront fonction du type de mission visé. En règle générale, l'élancement du ballon porteur 1 sera égal à 2 ou 3 fois sa variation de volume entre le sol et l'altitude plafond prédéterminée.

Ainsi, par exemple, pour l'exploration de la planète Mars, avec une altitude plafond de 4 à 6 kilomètres, l'élancement du ballon porteur 1 sera de 6 ou 7, le rapport de densité du gaz étant sensiblement de 2 entre cette altitude et le sol.

**Revendications**

1. Aérostat destiné à évoluer de façon autonome et réversible entre le sol d'une planète à atmosphère et une altitude plafond prédéterminée, du type ballon double comprenant :
   - un premier ballon (1), dit porteur, comportant une enveloppe fermée définissant un pôle supérieur et un pôle inférieur et destinée à contenir un gaz plus léger que le gaz présent dans l'atmosphère ambiante,
   - un deuxième ballon (3), dit montgolfière solaire, comportant une enveloppe réalisée en un matériau apte à absorber le rayonnement solaire et à émettre des rayonnements infrarouge à l'intérieur du volume qu'elle délimite de façon à chauffer le gaz renfermé, ladite enveloppe comprenant une extrémité, dite inférieure, comportant une ouverture permanente (6) destinée au remplissage de la montgolfière (3) par le gaz présent dans l'atmosphère ambiante,
ledit aérostat étant caractérisé en ce que :
   - le ballon porteur (1) est constitué d'une enveloppe à symétrie de révolution autour d'un axe réalisée en un matériau transparent au rayonnement solaire et comportant une portion sensiblement cylindrique et un pôle supérieur et un pôle inférieur situés sur l'axe de révolution,
   - la montgolfière solaire (3) est constituée d'une enveloppe à symétrie de révolution autour d'un axe comportant une portion (4) sensiblement cylindrique dotée :
     . d'une extrémité ouverte opposée à son extrémité inférieure et délimitée par une bordure annulaire de section conjuguée de celle du ballon porteur,
     . d'un fond aplati (5) comportant une ouverture permanente (6),
   - des moyens de fixation étanche de la bordure annulaire de la montgolfière sur la paroi périphérique du ballon porteur (1), sont adaptés pour solidariser les enveloppes desdits ballon porteur et montgolfière de façon que le ballon porteur (1) s'étende partiellement à l'intérieur de l'enveloppe de la montgolfière (3).

2. Aérostat selon la revendication 1 dans lequel la montgolfière (3) comporte une pièce annulaire (12) en un matériau rigide délimitant son ouverture permanente (6), caractérisé en ce que le fond aplati (5) de ladite montgolfière est réalisée en un matériau perméable pour le gaz présent dans l'atmosphère ambiante.

3. Aérostat selon la revendication 2, caractérisé en ce que le fond aplati (5) de la montgolfière (3) est constitué d'une pluralité de fibres (7) de même longueur espacées les unes par rapport aux autres et s'étendant radialement par rapport à l'axe de révolution de ladite montgolfière, lesdites fibres étant fixées vers une de leurs extrémités sur une bande (7) en un matériau souple adaptée pour être solidarisée sur la pièce annulaire (12), et vers leur extrémité opposée, sur une bande intermédiaire (10) en un matériau élastique relativement au matériau constitutif de la portion cylindrique (4), l'extrémité inférieure de ladite portion cylindrique étant solidarisée à cette bande intermédiare (10).

4. Aérostat selon l'une des revendications 2 ou 3, caractérisé en ce que la montgolfière solaire (3) comporte :
   - un lien interpolaire (13) fixé au pôle inférieur du ballon porteur (1) et se prolongeant au-dessous du pôle inférieur de ladite montgolfière en vue de maintenir une charge (14),
   - un anneau de guidage (15) du lien interpolaire (13) centré sur l'axe de révolution de ladite montgolfière, au niveau de son pôle inférieur, et solidarisé à la pièce annulaire (12) au moyen d'éléments de fixation radiaux (16).

5. Aérostat selon la revendication 4, caractérisé en ce que le lien interpolaire (13) de la montgolfière (3) se prolonge au-dessus du pôle inférieur du ballon porteur (1) de façon à relier ce dernier au pôle supérieur dudit ballon porteur.

6. Aérostat selon l'une des revendications 4 ou 5, caractérisé en ce qu'il comprend un brin auxiliaire (17) fixé, d'une part, sur le lien interpolaire (13) entre la charge (14) et le pôle inférieur de la montgolfière (3) et, d'autre part, sur l'anneau de guidage (15), ledit brin auxiliaire étant de longuer adaptée pour être sollicité en traction pour un état de remplissage prédéterminé de la montgolfière (3).

7. Aérostat selon l'une des revendications précédentes, caractérisé en ce que les enveloppes du ballon porteur (1) et de la montgolfière (3) sont réalisées en polyester de 3,5 microns d'épaisseur, l'enveloppe de la montgolfière (3) étant revêtue intérieurement d'une couche métallisée.

8. Procédé de réalisation d'un aérostat destiné à porter une charge (14) et à évoluer de façon réversible et autonome entre le sol d'une planète à atmosphère et une altitude plafond prédéterminée, du type consistant :
   - à réaliser une première enveloppe (1) fermée, dite ballon porteur, définissant un pôle inférieur et un pôle supérieur et destinée à renfermer un gaz plus léger que le gaz présent dans l'atmosphère,
   - à réaliser, au moyen d'un matériau apte à absorber le rayonnement solaire et à réemettre des rayonnements infrarouge, une deuxième enveloppe (3), dite montgolfière, comprenant une extrémité dite inférieure dotée d'une ouverture permanente (6),

ledit procédé étant caractérisé en ce qu'il consiste :
   - à estimer la variation de poussée, par unité de volume, de la montgolfière (3) en l'absence et en présence de rayonnement solaire et à déterminer le volume de cette montgolfière (3) nécessaire pour obtenir le décollage de l'aérostat et de la charge (14),
   - à déterminer une masse de gaz m1 qui est, en l'absence de rayonnement solaire :
     . nécessaire dans le ballon porteur (1) pour assurer le maintien dudit ballon porteur (1) et de la montgolfière (3) au-dessus du sol,
     . inférieure à la masse de gaz nécessaire dans le ballon porteur (1) pour assurer le décollage de l'aérostat et de la charge (14),
   - à réaliser un ballon porteur (1) constitué d'une enveloppe en un matériau transparent au rayonnement solaire présentant une symétrie de révolution autour d'un axe et comportant une portion sensiblement cylindrique et un pôle supérieur et un pôle inférieur situés sur l'axe de révolution, ledit ballon porteur étant de dimensions adaptées pour que son volume soit sensiblement supérieur au volume occupé par la masse de gaz m1 à l'altitude plafond prédéterminée,
   - à réaliser une montgolfière (3) présentant une symétrie de révolution autour d'un axe et une portion sensiblement cylindrique dotée :
     . d'une extrémité, dite supérieure, ouverte délimitée par une bordure annulaire de section conjuguée de celle du ballon porteur (1),
     . d'un fond aplati (5) comportant une ouverture permanente (6),
   - à enfiler la montgolfière (3) autour du ballon porteur (1), par sa bordure annulaire, de façon que :
     . le ballon porteur (1) s'étende partiellement à l'intérieur de ladite montgolfière (1),
     . la bordure annulaire de la montgolfière se trouve en regard d'une zone de la portion cylindrique du ballon porteur sollicitée en tension circonférentielle, au sol, pour une masse de gaz m1,

. le volume résiduel de la montgolfière (3), au sol, corresponde au volume nécessaire pour obtenir le décollage de l'aérostat et de la charge (14),
- à fixer la bordure annulaire de la montgolfière (3) sur la périphérie de l'enveloppe du ballon porteur (1).

9. Procédé de réalisation d'un aérostat, conforme à la revendication 8, caractérisé en ce que la fixation de la bordure annulaire de la montgolfière (3) sur le ballon porteur (1) consiste :
- à encoller ladite bordure annulaire sur ledit ballon porteur,
- à disposer un ruban circonférentiel autour de la bordure annulaire de la montgolfière (3) et à coller ce ruban respectivement sur le ballon porteur (1) et ladite montgolfière.

**Claims**

1. Balloon intended to operate in self-governing and reversible manner between the ground of a planet having an atmosphere and a predetermined maximum altitude, of twin-balloon type comprising :
- a first balloon (1), the so-called carrier balloon, comprising a closed envelope defining an upper pole and a lower pole and intended to contain a gas lighter than the gas present in the ambient atmosphere,
- a second balloon (3), the so-called solar Montgolfier balloon, comprising an envelope made from a material capable of absorbing the solar radiations and of emitting infra-red rays within the space delimited by it so as to heat the enclosed gas, said envelope comprising an end, the so-called lower end, comprising a permanent aperture (6) intended for filling Montgolfier balloon (3) with the gas present in the ambient atmosphere, said balloon being characterised in that :
- carrier balloon (1) is constituted by an envelope with rotation symmetry about an axis, said envelope being made from a material transparent to the solar radiation and comprising a substantially cylindrical section as well as an upper pole and a lower pole, said poles being located on the axis of rotation,
- solar Montgolfier balloon (3) is constituted by an envelope with rotation symmetry about an axis comprising a substantially cylindrical section (4), endowed with

. an open end opposite the lower end and delimited by an annular edge, the section of which matches that of the carrier balloon,
. a flattened base (5) comprising a permanent aperture (6),
- means for sealed attachment of the annular edge of the Montgolfier balloon to the peripheral wall of carrier balloon (1) so designed as to connect the envelopes of said carrier balloon and Montgolfier balloon firmly in such a manner that carrier balloon (1) extends partially within the envelope of Montgolfier balloon (3).

2. Balloon according to claim 1, in which Montgolfier balloon (3) comprises an annular fitting (12) made from a rigid material and delimiting its permanent aperture (6), characterised in that said flattened base (5) of said Montgolfier balloon is made from a material permeable to the gas present in the ambient atmosphere.

3. Balloon according to claim 2, characterised in that flattened base (5) of Montgolfier balloon (3) is constituted by a plurality of fibres (7) of identical length spaced in relation to one another and extending radially in respect of the axis of rotation of said Montgolfier balloon, said fibres being secured at one of their ends to a tape (9) made from a flexible material capable of being firmly connected with annular fitting (12), and at their opposite end to an intermediate tape (10) made from a material elastic in relation to the material from which cylindrical section (4) is made, the lower end of said cylindrical section being firmly connected with said intermediate tape (10).

4. Balloon according to one of claims 2 or 3, characterised in that solar Montgolfier balloon (3) comprises :
- an interpolar link (13) attached to the lower pole of carrier balloon (1) and extending below the lower pole of said Montgolfier balloon with a view to carrying a load (14),
- a guide ring (15) of interpolar link (13) concentric with the axis of rotation of said Montgolfier balloon at the level of its lower pole and firmly linked with annular fitting (12) by means of elements for radial attachment (16).

5. Balloon according to claim 4, characterised in that interpolar link (13) of Montgolfier balloon (3) extends above the lower pole of carrier balloon (1) so as to connect the latter with the upper pole of said carrier balloon.

6. Balloon according to one of claims 4 or 5, characterised in that it comprises an auxiliary strand (17) attached, on the one hand, to interpolar link (13) between load (14) and the lower pole of Montgolfier balloon (3) and, on the other hand, to guide ring (15), said auxiliary strand having a length such as to be subject to tension in a predetermined filling state of Montgolfier balloon (3).

7. Balloon according to one of the preceding claims, characterised in that the envelopes of carrier balloon (1) and Montgolfier balloon (3) are made from polyester with a thickness of 3.5 micron, the envelope of Montgolfier balloon (3) being lined internally with a metallised layer.

8. Process for producing a balloon intended to carry a load (14) and operate in reversible and self-governing manner between the ground of a planet having an atmosphere and a predetermined maximum altitude, of the type consisting :
   - in producing a first closed envelope (1), the so-called carrier balloon, defining a lower pole and an upper pole and intended to enclose a gas lighter than the gas present in the atmosphere,
   - in producing, by means of a material capable of absorbing the solar radiation and re-emitting infra-red rays, a second envelope (3), the so-called Montgolfier balloon, comprising an end, the so-called lower end, said end being endowed with a permanent aperture (6),
   said process being characterised in that it consists :
   - in estimating the variation in thrust per unit of volume of Montgolfier balloon (3) in the absence and in the presence of solar radiation and in determining the volume of said Montgolfier balloon (3) necessary in order to achieve lift-off of the balloon and its load (14),
   - in determining a gas mass ml which, in the absence of solar radiation :
     . is necessary in carrier balloon (1) in order to ensure maintenance of said carrier balloon (1) and Montgolfier balloon (3) above the ground,
     . is smaller than the gas mass necessary in carrier balloon (1) in order to ensure lift-off of the balloon and its load (14),
   - in producing a carrier balloon (1) constituted by an envelope made from a material transparent to the solar radiation and having rotation symmetry about an axis as well as comprising a substantially cylindrical section and an upper pole and a lower pole located on the axis of rotation, said carrier balloon being so dimensioned that its volume is substantially larger than the volume occupied by the gas mass ml at the predetermined maximum altitude,
   - in producing a Montgolfier balloon (3) with rotation symmetry about an axis and a substantially cylindrical section, endowed with :
     . an open end, the so-called upper end, delimited by an annular edge of a section matching that of carrier balloon (1),
     . a flattened base (5) comprising a permanent aperture (6),
   - in fitting Montgolfier balloon (3) about carrier balloon (1) by its annular edge, so that :
     . carrier balloon (1) extends partly within said Montgolfier balloon (3),
     . the annular edge of the Montgolfier balloon is opposite a zone of the cylindrical section of the carrier balloon which, with a gas mass ml is, at ground level, subject to circumferential tension,
     . the residual volume of Montgolfier balloon (3) corresponds, at ground level, to the volume necessary in order to achieve lift-off of the balloon and load (14),
   - in securing the annular edge of Montgolfier balloon (3) to the periphery of the envelope of carrier balloon (1).

9. Process for bringing about a balloon according to claim 8, characterised in that attachment of the annular edge of Montgolfier balloon (3) to carrier balloon (1) consists ;
   - in glueing said annular edge to said carrier balloon,
   - in arranging a circumferential tape about the annular edge of Montgolfier balloon (3) and in glueing said tape respectively to carrier balloon (1) and said Montgolfier balloon.

**Patentansprüche**

1. Luftballon, bestimmt zur selbständigen und umsteuerbaren Bewegung zwischen dem Boden eines Planeten mit Amosphäre und einer im voraus bestimmten Maximalhöhe, in Art eines Doppelballons umfassend :
- einen ersten Ballon (1), den sogenannten Trägerballon, mit einer geschlossenen Hülle, die einen oberen Pol und einen unteren Pol abgrenzt und bestimmt ist, ein Gas einzuschließen, das leichter ist als das in der Umgebungsatmosphäre gegenwärtige Gas,
- einen zweiten Ballon (3), den sogenannten solaren Montgolfierballon, mit einer Hülle aus einem Material, das in der Lage ist, die Sonnenstrahlung zu absorbieren und innerhalb des von ihm abgegrenzten Raumes infrarote Strahlen abzugeben, um das eingeschlossene Gas zu erhitzen, wobei die besagte Hülle ein Ende, das sogenannte untere Ende, mit einer permanenten Öffnung (6) umfaßt, die zum Füllen des Montgolfierballons (3) mit dem in der Umgebungsatmosphäre vorhandenen Gas bestimmt ist,
wobei der besagte Luftballon dadurch gekennzeichnet ist,
- daß der Trägerballon (1) in einer Hülle mit Rotationssymmetrie um eine Achse besteht, wobei die besagte Hülle aus einem für Sonnenstrahlung durchlässigen Material gefertigt ist und einen im wesentlichen zylindrischen Abschnitt sowie, auf der Rotationsachse, einen oberen Pol und einen unteren Pol umfaßt,
- daß der solare Montgolfierballon (3) in einer Hülle mit Rotationssymmetrie um eine Achse besteht, die einen im wesentlichen zylindrischen Abschnitt (4)
  . mit einem offenen Ende, das sich seinem unteren Ende gegenüber befindet und durch einen ringförmigen Rand mit einem dem des Trägerballons entsprechenden Querschnitt abgegrenzt ist,
  . mit einem abgeflachten Grundteil (5) mit einer permanenten Öffnung (6), umfaßt,
- daß Mittel für dichte Befestigung des ringförmigen Randes des Montgolfierballons an der peripheren Wand des Trägerballons (1) so beschaffen sind, daß sie feste Verbindung der Hüllen des besagten Trägerballons und des besagten Montgolfierballons gestatten, und zwar erstreckt sich Trägerballon (1) teilweise innerhalb der Hülle des Montgolfierballons (3).

2. Luftballon nach Anspruch 1, bei dem der Montgolfierballon (3) ein ringförmiges Teil (12) aus einem starren Material umfaßt, wobei das besagte ringförmige Teil seine permanente Öffnung (6) abgrenzt, dadurch gekennzeichnet, daß das abgeflachte Grundteil (5) des besagten Montgolfierballons aus einem für das in der Umgebungsatmosphäre vorhandene Gas durchlässigen Material gefertigt ist.

3. Luftballon nach Anspruch 2, dadurch gekennzeichnet, daß das abgeflachte Grundteil (5) des Montgolfierballons (3) aus einer Vielzahl von Fasern (7) mit gleicher Länge besteht, die im Verhältnis zueinander mit Abstand angeordnet sind und sich im Verhältnis zu der Rotationsachse des besagten Montgolfierballons radial erstrecken, und zwar sind die besagten Fasern an einem ihrer Enden an einem Band (9) aus einem flexiblen Material befestigt, das so beschaffen ist, daß es mit dem ringförmigen Teil (12) fest verbunden werden kann, während sie an ihrem gegenüberliegenden Ende an einem Zwischenband (10) aus einem im Verhältnis zu dem den zyilndrischen Abschnitt (4) bildenden Werkstoff elastischen Material angebracht sind, wobei das untere Ende des besagten zylindrischen Abschnitts fest mit diesem Zwischenband (10) verbunden ist.

4. Luftballon nach einem der Ansprüche 2 oder 3, dadurch gekennzeichnet, daß der solare Montgolfierballon (3) folgende Teile umfaßt :
- ein am unteren Pol des Trägerballons (1) angebrachtes Zwischenglied (13), das sich unterhalb des unteren Pols des besagten Montgolfierballons erstreckt, um eine Last (14) abzustützen,
- einen Führungsring (15) für das Zwischenglied (13), der mit der Rotationsachse des besagten Montgolfierballons konzentrisch ist, wobei sich der besagte Führungsring auf Höhe seines unteren Pols befindet und mit Hilfe radialer Befestigungselemente (16) fest mit dem ringförmigen Teil (12) verbunden ist.

5. Luftballon nach Anspruch 4, dadurch gekennzeichnet, daß sich das Zwischenglied (13) des Montgolfierballons (3) oberhalb des unteren Pols des Trägerballons (1) so erstreckt, daß der besagte untere Pol mit dem oberen Pol des besagten Trägerballons verbunden ist.

6. Luftballon nach einem der Ansprüche 4 oder 5, dadurch gekennzeichnet, daß er einen Hilfsstrang (17) umfaßt, der einerseits an dem Zwischenglied (13) zwischen der Last (14) und dem unteren Pol des Montgolfierballons (3) angebracht ist, und andererseits an dem Führungsring (15), wobei die Länge des besagten Hilfsstrangs so beschaffen ist, daß dieser bei einem vorbestimmten Füllungszustand des Montgolfierballons (3) durch Zugspannung beaufschlagt wird.

7. Luftballon nach einem der vorstehenden Ansprüche, dadurch gekennzeichnet, daß die Hüllen des Trägerballons (1) und des Montgolfierballons (3) aus Polyester mit einer Dicke von 3,5 Mikron bestehen und die Hülle des Montgolfierballons (3) an der Innenseite mit einer metallisierten Schicht ausgekleidet ist.

8. Verfahren zur Erstellung eines Luftballons, der zur Beförderung einer Last (14) und zu umsteuerbarer und selbständiger Bewegung zwischen dem Boden eines Planeten mit Atmosphäre und einer vorbestimmten Maximalhöhe bestimmt ist, und zwar der folgenden Stufen umfassenden Art :
   - Herstellung einer geschlossenen ersten Hülle (1), des sogenannten Trägerballons, die einen unteren Pol und einen oberen Pol abgrenzt und die Aufgabe hat, ein Gas einzuschließen, das leichter ist als das in der Atmosphäre gegenwärtige Gas,
   - Erstellung mit Hilfe eines zur Absorption der Sonnenstrahlung und Abgabe infraroter Strahlen geeigneten Materials einer zweiten Hülle (3), des sogenannten Montgolfierballons, wobei die besagte Hülle ein Ende, das sogenannte untere Ende, mit einer permanenten Öffnung (6) umfaßt,
   wobei das besagte Verfahren dadurch gekennzeichnet ist, daß es in den folgenden Schritten besteht :
   - im Schätzen der Schubänderung je Raumeinheit des Montgolfierballons (3) in Abwesenheit und in Gegenwart einer Sonnenstrahlung und im Bestimmen des Volumens des besagten Montgolfierballons (3), das erforderlich ist, um Abhub des Luftballons und der Last (14) zu erzielen,
   - im Bestimmen einer Gasmasse ml, die in Abwesenheit einer Sonnenstrahlung
      . in dem Trägerballon (1) erforderlich ist, um Schweben des besagten Trägerballons (1) und des Montgolfierballons (3) oberhalb des Bodens zu gewährleisten,
      . geringer ist als die Gasmasse, die in dem Trägerballon (1) erforderlich ist, um Abhub des Luftballons und der Last (14) zu gewährleisten,

   - im Herstellen eines Trägerballons (1), der in einer Hülle aus einem für Sonnenstrahlung durchlässigen Material mit Rotationssymmetrie um eine Achse besteht und einen wesentlich zylindrischen Abschnitt sowie einen oberen Pol und einen unteren Pol auf der Rotationsachse umfaßt, wobei der besagte Trägerballon so bemessen ist, daß sein Volumen erheblich größer ist als das durch die Gasmasse ml in der vorbestimmten Maximalhöhe beanspruchte Volumen,
   - im Herstellen eines Montgolfierballons (3) mit Rotationssymmetrie um eine Achse und einen im wesentlichen zylindrischen Abschnitt, der folgende Teile umfaßt :
      . ein offenes Ende, das sogenannte obere Ende, das durch einen ringförmigen Rand mit dem Querschnitt des Trägerballons (1) entsprechendem Querschnitt abgegrenzt ist,
      . ein abgeflachtes Grundteil (5) mit einer permanenten Öffnung (6),
   - im Anlegen des Montgolfierballons (3) rings um den Trägerballon (1) mit Hilfe eines ringförmigen Randes, so daß
      . sich der Trägerballon (1) teilweise im Inneren des besagten Montgolfierballons (3) erstreckt,
      . der ringförmige Rand des Montgolfierballons sich gegenüber einer Zone des zylindrischen Abschnitts des Trägerballons, die bei einer Gasmenge ml am Boden durch eine Umfangszugspannung beansprucht wird, befindet,
      . das Restvolumen des Montgolfierballons (3) am Boden dem Volumen entspricht, das nötig ist, um Abhub des Luftballons und der Last (14) zu erzielen,
   - im Anbringen des ringförmigen Randes des Montgolfierballons (3) an der Peripherie der Hülle des Trägerballons (1).

9. Verfahren zur Erstellung eines Luftballons nach Anspruch 8, dadurch gekennzeichnet, daß die Befestigung des ringförmigen Randes des Montgolfierballons (3) am Trägerballon (1) in den folgenden Schritten besteht :
   - im Kleben des besagten ringförmigen Randes an den besagten Trägerballon,
   - im Anbringen eines Umfangsbandes rings um den ringförmigen Rand des Montgolfierballons (3) und im Ankleben dieses Bandes am Trägerballon (1) bzw. an dem besagten Montgolfierballon.

Fig. 1

Fig. 2

Fig. 3

Fig. 4

Fig. 5a

9    7    10    11

Fig.    5b

9    7    8    10    11    4